# EUROPEAN PATENT APPLICATION

(11) **EP 4 467 732 A1**
(43) Date of publication of application: **27.11.2024**
(21) Application number: 23174924.3
(22) Date of filing: 23.05.2023
(51) Int. Cl.: E03B 3/03, A01G 25/00, E03B 5/02

(54) **WATER COLLECTION MODULE**

(71) Applicant: Husqvarna AB, 561 82 Huskvarna (SE)
(72) Inventor: Klotz, Boris, 89075 Ulm (DE); Brehm, Hanna, 89231 Neu-Ulm (DE); Schlegel, Tobias, 89171 Illerkirchberg (DE)
(74) Representative: Finkele, Rolf

(57) **Abstract**

A base element **(100)** of a water collection module includes a bottom side **(102).** The base element **(100)** also includes a top side **(104),** which is opposite to the bottom side **(102)** and connected to the bottom side **(102)** via a side surface **(106).** The bottom side **(102)** forms a base face for standing the base element **(100)** on an underlying surface and the opposite side, i.e., the top side **(104)** forms a mounting face to hold any other device, in particular a water reservoir, mounted to it. The base element **(100)** is characterized in that a holding structure **(110)** is formed inside the base element **(100).** The holding structure **(110)** incorporates at least one holding pocket **(112)** for removably holding a watering accessory.

## Description

### TECHNICAL FIELD

The present disclosure relates to a water collection module, and more particularly to a base element of a water collection module that may allow easy access of collected water.

### BACKGROUND

Many areas of the world rely upon the collection and use of reclaimed precipitation as a primary source of usable water. Water reservoirs and other devices are utilized for the purpose of collecting and storing water runoff from impervious surfaces such as the rooftops of dwellings. While generally unpotable, such systems provide a useful source of water for tasks such as irrigation, washing cars or driveways, and the like.

Many such water reservoirs and other similar rainwater recollection systems store the water in a stagnant, manually accessed manner. Items such as pails or buckets are often the only means of accessing and transporting the water. As such, the process of utilizing the reclaimed water is often tedious or impossible, thus reducing the efficiency of employing such methods and resulting in the use of municipal wells or other sources of water for many tasks, which in turn eliminates the usefulness and purposes of such water reservoir systems.

Further, because of continuous innovation to allow easy access of collected water, systems have been developed in which the water reservoir are mounted on a base element to elevate the water reservoir for access to the water. The water is extracted from the water reservoir by opening a spigot provided near the bottom of the water reservoir and filling a container such as a watering can. A soaker hose may also be attached to the bottom of the water reservoir to water nearby plants.

However, such systems do not provide an adequate means for the varied reuse of the collected water according to a user's needs. Further, such systems do not provide adequate storage and pressurizing means to allow a user to use the water in a simple and conventional manner upon collection. Accordingly, there exists a need for a rainwater collection system or module for facilitating easy access to the stored water from the water reservoir for further usage in an ergonomic and efficient manner.

An example of an improved water collection module is provided in United States Patent US 8,578,976 B1 (hereinafter referred to as '976 reference). The '976 reference provides a water collection module with a water reservoir mounted on top of a hollow base element. At the bottom of the water reservoir there is a water outlet to which various watering components may be fixed and which may then be housed inside a free space surrounded by the base element.

### SUMMARY OF THE INVENTION

In view of the above, it is an objective of the present invention to solve or at least reduce the drawbacks discussed above. The objective is at least partially achieved by a base element of a water collection module.

According to an aspect of the present invention, the base element of the water collection module includes a bottom side. The base element also includes a top side, which is opposite to the bottom side, and connected to the bottom side via a side surface. The bottom side forms a base face for standing the base element on an underlying surface and the opposite side, i.e., the top side forms a mounting face to hold any other device, in particular a water reservoir, mounted to it. The base element is characterized in that a holding structure is formed inside the base element. The holding structure incorporates at least one holding pocket for removably holding a watering accessory.

Thus, the present disclosure provides an improved base element for the water reservoir. The base element may provide a certain height to the water reservoir relative to the underlying surface, which may allow easy access of the water stored in the water reservoir, for example by opening a tap provided proximate to a bottom of the water reservoir. The base element advantageously includes the holding structure incorporating at least one holding pocket. The at least one holding pocket allows to removably hold at least one watering accessory, which may be configured to transport water collected or stored in the water reservoir for various applications, such as, but not limited to, gardening, kitchen uses, household purposes, etc. The at least one watering accessory, which may be removably held in the at least one holding pocket may enable an easy and ergonomic access of the collected water. The at least one watering accessory may allow to access water from the water reservoir without changing structural orientation of the water collection module such as unmounting of the water reservoir from the top surface of the base element. This may save any extra effort or manpower to be used for accessing water. Further, the at least one holding pocket may allow removable holding of the at least one watering accessory in an organized and stable manner.

The water collection module according to the present invention may denote an assembly of the water reservoir and the base element such that the water reservoir may be mounted on the base element.

According to an exemplary embodiment of the invention, the base element may have a tapered cylinder, or frustum like shape. However, the base element may have any other shape and size without limiting the scope of the present invention.

According to an exemplary embodiment of the invention, the base element and the holding structure are integrally formed. The base element and the holding structure may preferably be made from a plastic material and may be integrally formed by any means known in the art. The integral formation may prove to be cost-effective, fast, and simple way of manufacturing the base element and the holding structure.

According to an exemplary embodiment of the invention, the at least one holding pocket may be formed using a plastic material by employing any manufacturing process such as, but not limited to, molding. The at least one holding pocket may be clipped or glued to the base element or may be integrally formed with the base element.

According to a further exemplary embodiment of the invention, the at least one holding pocket may be formed using foamed material that is connected to the base element. The foamed material may advantageously have benefits such as, but not limited to, thermal insulation, high strength per unit weight, and ease of molding. The at least one holding pocket may be able to soak in heat produced by the watering accessory held by the at least one holding pocket such that other watering accessories arranged nearby may continue their operation without any affect or influence of heat. The at least one holding pocket may for example be made from one or more of vinyls, polystyrene, polyethylene, phenolics, silicones, cellulose acetate, and urethanes.

According to an exemplary embodiment of the invention, the at least one holding pocket may include at least one coupling cavity to allow fluid coupling between the various watering accessories removably held in the at least one holding pocket such that the watering accessories may be required to be fluidly coupled for allowing transport of the collected water for various applications.

According to an exemplary embodiment of the invention, the watering accessory is formed by one of a pump and/or a hose and/or a hose reel. One or more watering accessories may be removably held or stored in the at least one holding pocket of the holding structure integrally formed with the base element. However, all the water accessories may or may not be required to be in operation simultaneously. The water accessories to be held or stored in the base element may be selected by a user based on current and future application requirements. For example, the user may store the pump in the base element, and a few years after may realize a need for the hose reel to be used in conjunction with the pump and then may store the hose reel as well in the base element and fluidly connect both the pump and the hose reel. The watering accessories such as the pump, the hose, and the hose reel may alone or together allow the user to have easy access of the water stored in the water reservoir for various industrial and domestic applications. Further, the watering accessory may be any water accessory other than the pump, the hose, and the hose reel as well.

According to an exemplary embodiment of the invention, the holding structure incorporates the holding pocket for holding a water inlet. The water inlet is configured to receive water from the water reservoir. The water inlet may be fluidly connected or coupled to a water outlet of the water reservoir which may be provided at the bottom of the water reservoir. The water inlet may be a hose, which may be fluidly coupled to the water outlet of the water reservoir using, for example, a hose connector. The water inlet may be advantageously held in the holding pocket and may act as an interface between the water outlet of the water reservoir and the other watering accessories such as the pump, the hose, or the hose reel held in the holding structure of the based element.

According to an exemplary embodiment of the invention, the holding structure incorporates the holding pocket for holding at least one tube or hose to transport water entering the base element via the water inlet. The water inlet may be fluidly connected with the at least one tube or hose held in the holding pocket of the holding structure. The at least one tube or hose may further be fluidly connected with the watering accessory, for example, the pump, or the hose reel held in an adjacent holding pocket such that the water received from the water inlet may be transferred to the watering accessory for to allow for easy access of the collected or stored water for the user.

According to an exemplary embodiment of the invention, the base element includes an opening to access the watering accessory. The opening may be one or more openings formed on the side surface of the base element. The opening may allow, for example, a hose of the hose reel to be taken out and fluidly connect with a garden spray, and the like.

According to an exemplary embodiment of the invention, the opening in the side surface of the base element may be formed by removing a separable part from the base element after purchase of the base element. However, the opening may be covered after use with a hinged door like structure without affecting the aesthetics of the base element.

According to an exemplary embodiment of the invention, the opening in the side surface of the base element may be formed by sliding out a separable part that may slidingly be removed from the side surface of the base element when the access to the watering accessory is required and that may be slidingly be engaged back with side surface when the access to the watering accessory is not required. This may retain the aesthetics of the base element.

According to an exemplary embodiment of the invention, the hose reel is held in an upright position. The hose reel is removably held in the upright position in the holding pocket such that the hose of the hose reel may conveniently be taken out of the opening of the base element and may conveniently be winded back in the hose reel without any tangling, or other similar problems. However, the hose reel may be held in any other suitable position as well. For example, the hose reel may be held in a vertical position. In an advantageous embodiment the base element or the hose reel itself embodies a hose guide that aids the coiling of the hose onto the hose reel avoiding an entanglement of the hose during the winding process.

According to an exemplary embodiment of the invention, a plurality of legs extends from the top side to the bottom side to support the base element on the underlying surface. The plurality of legs may be any number of legs. The plurality of legs along with a circumference of the bottom side may take up the forces due to the weight of the water reservoir, one or watering accessories, and the fluid connection arrangements inside of the base element such that the base element with all the removably held components discussed above may be stably held on the underlying surface and the collected water may be easily and ergonomically accessed by the user.

According to an exemplary embodiment of the invention, the plurality of legs may be equidistant. The equidistant legs may be able to divide the force or weight of the water reservoir, one or watering accessories, and the fluid connection arrangements inside of the base element equally among themselves. Further, the plurality of legs may have a solid or hollow body.

According to an exemplary embodiment of the invention, the circumference of the bottom side may take up all the weight of the water reservoir, one or watering accessories, and the fluid connection arrangements inside of the base element such that the base element with all the removably held components discussed above may be stably held on the underlying surface and the collected water may be easily and ergonomically accessed by the user. Further, all other portions of the base element interior to the circumference of the bottom side, particularly the holding structure may be structurally lifted marginally relative to the circumference of the bottom side. Such a design of the base element may be particularly beneficial for compact storage and transportation of a plurality of base elements such as by stacking of the plurality of base elements.

According to a further aspect of the present invention, the water collection module includes the water reservoir housed on top of the base element. The water reservoir may be a water tank, and the like that may be stably held, housed, or mounted on top of the base element. The water reservoir may further be covered with a cover to prevent contamination of the collected water.

Before discussing the invention with the help of the drawings the invention will be briefly discussed in general. A base element is designed to be placed below a water reservoir. The base element includes prefabricated structures which may enable a user to implement suitable accessories inside the base element easily. This compact and integrated solution may connect a hose or hose box, a pump, a battery compartment, a pipeline system, and a watering automation equipment (or a watering computer). The base element may be used just to increase the height of the water reservoir when there is no accessory implemented inside the base element.

The base element according to the present invention may provide one solution for all necessary steps required to be taken to use rainwater. The base element according to the present invention may provide modularity and combination of different accessories according to consumer needs. The base element according to the present invention may provide high grade of mechanical linkage to handle forces caused by usage of the accessories. Further, the base element according to the present invention may provide elevated water reservoir, which may facilitate filling of a water can, and the like. Further, the base element according to the present invention may improve efficiency of the rainwater usage by reducing distances between the water reservoir and the hose or pipeline system. Further, the base element according to the present invention may provide a puristic design such that there may be only one element in the garden leading to a tidy garden. Further, the base element according to the present invention may provide a closed, clean system such that no insects, no leaves, no algae, or other polluting elements may affect collected water. Further, the base element according to the present invention may functionally provide a stable stand to the water reservoir.

According to an exemplary embodiment of the invention, the base element may be placed below or next to the water reservoir and may include preproduced structures to be connected with the suitable accessory like the pump, battery compartment, garden hose, automatic garden hose box or equipment for automatic irrigation.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** illustrates a perspective side view of a base element, in accordance with an exemplary embodiment of the present disclosure;
**FIG. 2** illustrates a perspective bottom view of a base element, in accordance with an exemplary embodiment of the present disclosure;
**FIG. 3** illustrates a perspective top view of a base element, in accordance with an exemplary embodiment of the present disclosure;
**FIG. 4** illustrates another perspective top view of a base element, in accordance with an exemplary embodiment of the present disclosure;
**FIG. 5** illustrates a perspective top view of a base element removably holding two water accessories, in accordance with an exemplary embodiment of the present disclosure;
**FIG. 6** illustrates a perspective side view of a base element with an opening, in accordance with an exemplary embodiment of the present disclosure; and
**FIG. 7** illustrates a perspective side view of a plurality of base elements assembled in a stacked configuration, in accordance with an exemplary embodiment of the present disclosure.

### DETAILED DESCRIPTION OF THE DRAWINGS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

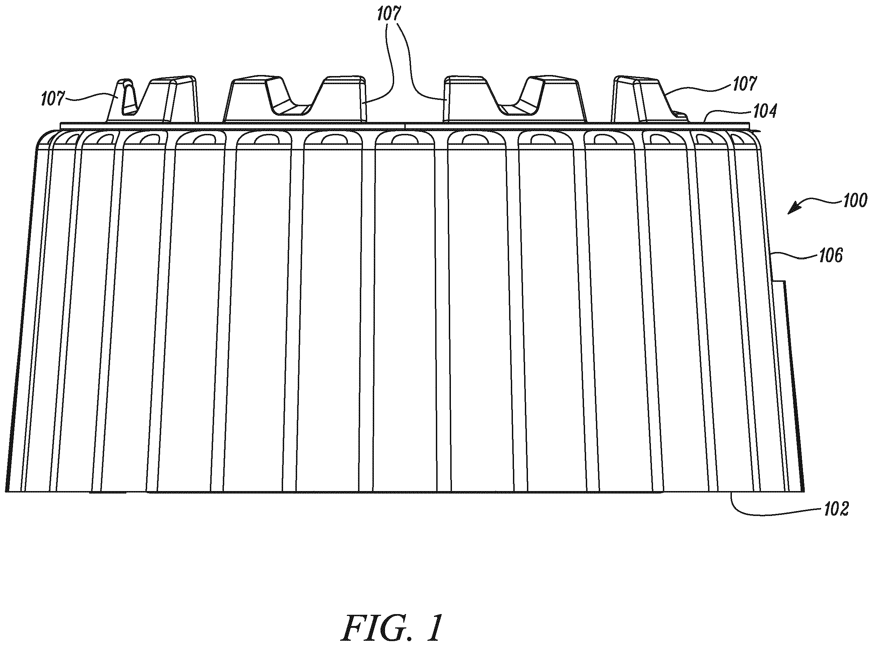

**FIG. 1** illustrates a perspective side view of a base element **100.** The base element **100** is a part of a water collection module that constitutes a water reservoir (not shown) and the base element **100** such that the water reservoir is removably mounted on the base element **100.** The base element **100** of the water collection module includes a bottom side **102.** The base element **100** also includes a top side **104.** The top side **104** is opposite to the bottom side **102.** The top side **104** is connected to the bottom side **102** via a side surface **106.** The base element **100** has a frustum or tapered cylinder like shape. The side surface **106** is a slanted surface joining the top side **104** and the bottom side **102.** The bottom side **102** and the top side **104** both have a circular cross-section. Area of the bottom side **102** is marginally greater than an area of the top side **104.**

The top side **104** further includes a plurality of protrusions **107.** The plurality of protrusions **107** are spread over an annular surface of the top side **104.** Each of the plurality of protrusions **107** are separated from each other by equal or unequal distances. Further, each of the plurality of protrusions **107** includes two crests separated by a trough. Further, each of the plurality of protrusions **107** is defined along three perpendicular axis (not shown) such that each of the plurality of protrusions **107** has a length, a breadth, and a height. The trough of some of the plurality of the protrusions **107** is marginally above the surface of the top side **104** while the trough of remaining protrusions **107** aligns with the surface of the top side **104.** Further, the two crests of each of the plurality of protrusions **107** is similar in height while the two crests of each of remaining protrusions **107** is different in height. Further, the maximum height of the crests of the plurality of protrusions **107** is similar. Further, some of the plurality of protrusions **107** have one crest of the two crests having height similar to the height of the corresponding trough.

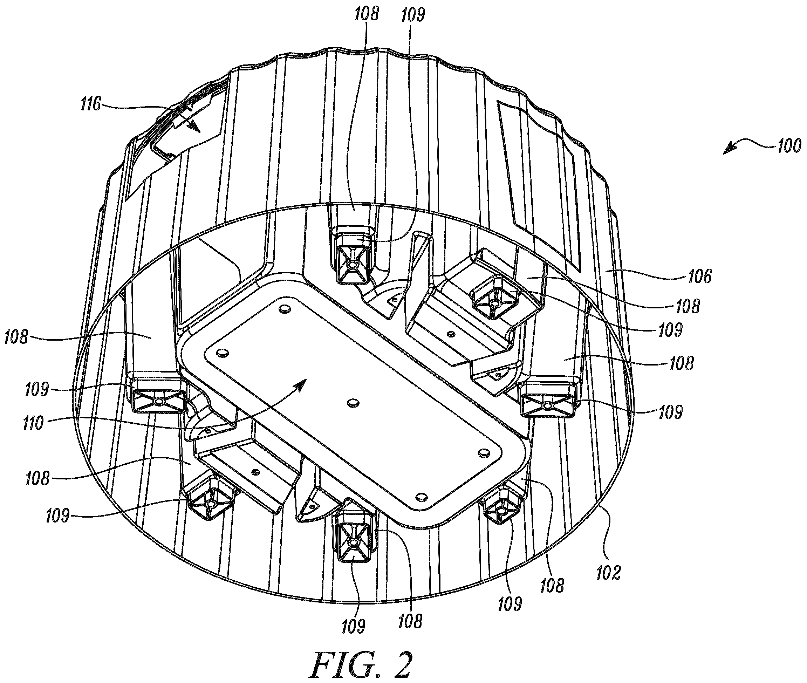

**FIG. 2** illustrates a perspective bottom view of the base element **100.** The bottom side **102** forms a base face for standing the base element **100** on an underlying surface. Further, a plurality of legs **108** extends from the top side **104** to the bottom side **102** to support the base element **100** on the underlying surface. A circumference of the bottom side **102** and the plurality of legs **108** take up all the weight being put upon the base element **100** in a top to down direction, i.e., in a direction leading from the top side **104** towards the bottom side **102.** The plurality of legs **108** are not visible to a user when the base element **100** removably mounting the water reservoir is standing on the underlying surface as the plurality of legs **108** are surrounded by the side surface **106** and the water reservoir mounted on the base element **100.** The plurality of legs **108** are at least partially hollow. The plurality of legs **108** have different cross-section areas. The plurality of legs **108** further includes a foot **109** corresponding to each of the plurality of legs **108.** The foot **109** is formed in one piece with the corresponding leg 108. The foot **109** is formed at the bottom of each of the plurality of legs **108.** The foot **109** forms a contact surface of the leg **108** with the underlying surface.

**FIG. 2** also shows a holding structure **110** of the base element **100.** The holding structure **110** and the base element **100** are integrally formed. The holding structure **110** and the base element **100** are conceived as a single unit. The holding structure **110** is not visible from outside when the base element **100** removably mounting the water reservoir is standing on the underlying surface as the holding structure **110** is surrounded by the side surface **106** and the water reservoir mounted on the base element **100.** The holding structure **110** at least partially extends from the top side **104** to the bottom side **102.**

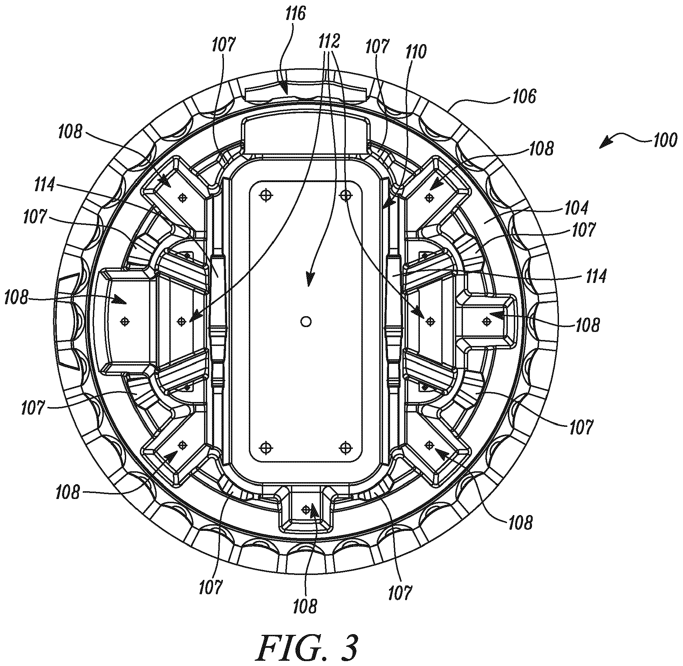

**FIG. 3** illustrates a perspective top view of the base element **100.** The side opposite to the bottom side **102,** i.e., the top side **104** forms a mounting face to hold any other device. The top side **104** includes the plurality of protrusions **107** spread at various positions over the annular surface of the top side **104.** Further, each of the plurality of protrusions **107** as already discussed includes two crests separated by the trough. The crests with the equivalent maximum height across each of the plurality of protrusions **107** form an actual mounting face to hold any other device. In other words, the top side **104** holds any other device via the plurality of protrusions **107** integrally formed with the top side **104.** The other device is the water reservoir such that the water reservoir is removably mounted to the top side **104** of the base element **100.** In other words, the water collection module includes the water reservoir housed on top of the base element **100.**

The base element **100** further includes the holding structure **110** formed inside the base element **100.** The holding structure **110** incorporates at least one holding pocket **112** for removably holding a watering accessory. The at least one holding pocket **112** as shown in **FIG. 3** is three holding pockets **112** with different spatial volume. The at least one holding pocket **112** has a depth at least partially extending from the top side **104** to the bottom side **102.** The at least one holding pocket **112** are separated from each other via walls **114.** The walls **114** at least partially separate the one holding pocket **112** from the adjacent holding pocket **112.** The at least one holding pocket **112** is annularly enclosed by the base element **100.**

Further, the base element **100,** as shown in **FIG. 3** also includes an opening **116** to access the watering accessory removably held by the at least one holding pocket **112.** The opening **116** is formed on the side surface **106** of the base element **100.** The opening **116** acts as an interface between the inside of the base element **100** and the outside of the base element **100.** The inside of the base element **100** is at least partially visible from the outside of the base element **100** via the opening **116.** The opening **116** at least partially provides access to the holding structure **110** and the at least one holding pocket **112** and the watering accessory removably held in the base element **100.**

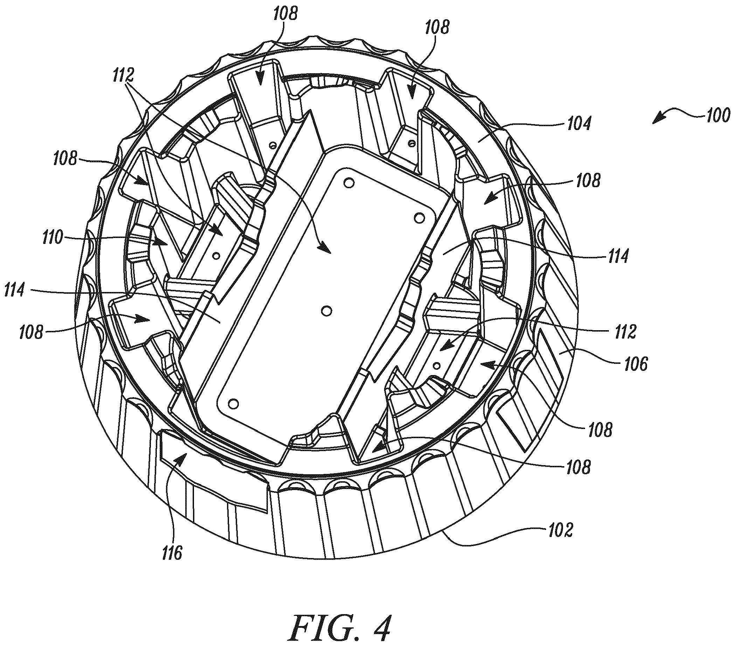

**FIG. 4** illustrates another perspective top view of the base element **100.** The base element **100** includes the bottom side **102** and the top side **104** connected by the side surface **106.** The base element **100** further includes the holding structure **110** formed inside the base element **100.** The holding structure **110** incorporates the at least one holding pocket **112** for removably holding the watering accessory. The at least one holding pocket **112** is separated from one another by the walls **114.** The base element **100** further includes the plurality of legs **108** to bear the weight of the holding structure **110,** the watering accessory, and the water reservoir removably mounted on the base element **100.** The plurality of legs **108** allow the base element **100** to stand or rest on the underlying surface in a stable and secure manner. Further, the base element **100** includes the opening **116** to access the watering accessory. The opening **116** is formed on the side surface **106** of the base element **100.**

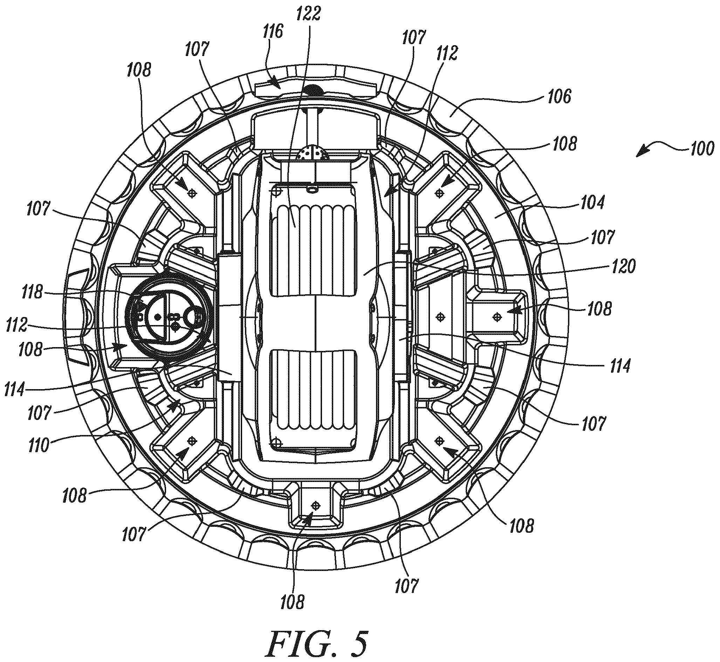

**FIG. 5** illustrates a perspective top view of the base element **100** removably holding two water accessories. The watering accessory is formed by one of a pump and/or a hose and/or a hose reel. However, the two watering accessories shown in **FIG. 5** are the pump **118** and the hose reel **120.** The pump **118** is removably held in one holding pocket **112** and the hose reel **120** is removably held in another adjacent holding pocket **112** separated by a wall **114** configured at least partially separating the adjacent holding pockets **112.** The hose reel **120** as well as the pump **118** are removably held in an upright position. The hose reel **120** further includes a hose **122** winded on the hose reel **120.** The hose **122** is accessible by the user via the opening **116** of the base element **100.**

Further, the pump **118** and the hose reel **120** is at least partially enclosed by the at least one holding pocket **112.** Further, the plurality of legs **108** are at least partially hollow but have sufficient strength to take upon the weight of the water reservoir, the pump **118,** and the hose reel **120** such that the water collection module is held on the underlying surface in the stable and secure manner.

Further, in another embodiment, the holding structure **110** incorporates the holding pocket **112** for holding a water inlet, such as a hose which may be configured to receive collected or stored water from the water reservoir, particularly a water outlet of the water reservoir.

Further, in yet another embodiment, the holding structure **110** incorporates the holding pocket **112** for holding at least one tube or hose to transport water entering the base element **100** via the water inlet. The water inlet may be fluidly connected with the at least one tube or hose held in the holding pocket of the holding structure.

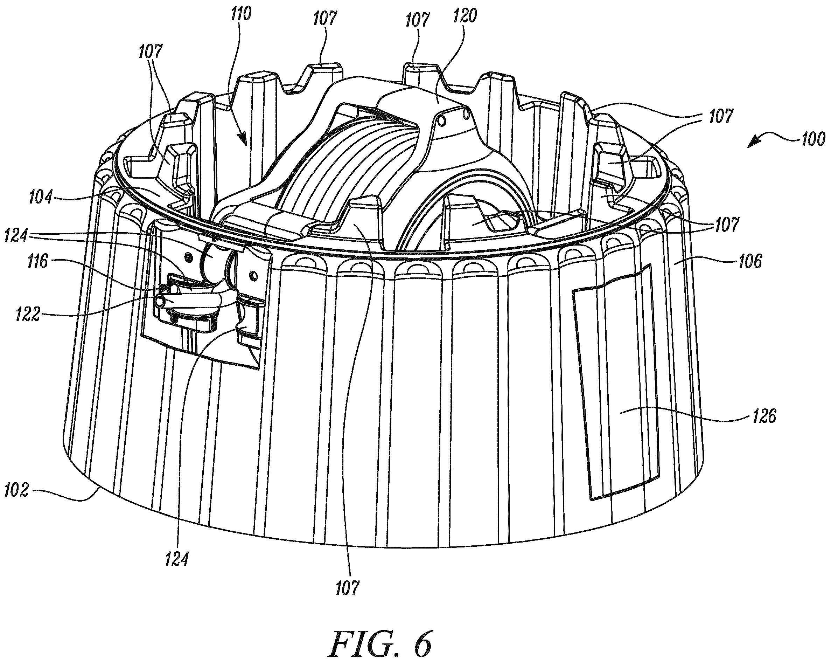

**FIG. 6** illustrates a perspective side view of the base element **100** with the opening **116.** The opening **116** has a rectangular cross-section. The opening **116** allows the user to take out the hose **122** of the hose reel **120** removably held in the holding structure **110.** The opening **116** at least partially extends from the top side **104** of the base element **100** towards the bottom side **102.** The opening **116** at least partially extends along the annular side surface **106.** Further, the opening **116** includes rollers **124** to allow easy winding and unwinding movement of the hose **122** respectively in and out of the opening **116** of the base element **100.** Further, the base element **100** includes an inspection door **126** to allow inspection of the pump **118** and the hose reel **120** and/or any other watering accessory removably held in the base element **100.**

In another embodiment of the present invention, the circumference of the bottom side **102** of the base element **100** takes up all the weight being put upon the base element **100** in the top to down direction. In other words, there are no legs **108** extending from the top side **104** to the bottom side **102** to support the base element **100** on the underlying surface. Further, several or even all other portions of the base element **100** interior to the circumference of the bottom side **102,** particularly the holding structure **110** are structurally lifted marginally relative to the circumference of the bottom side **102.**

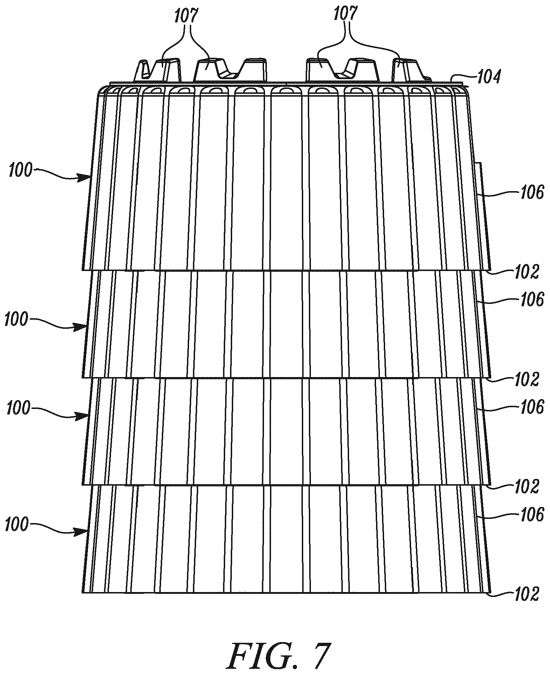

**FIG. 7** illustrates a perspective side view of the plurality of base elements **100** assembled in the stacked configuration and formed without the plurality of legs **108.** For illustration purposes, the plurality of base elements **100** are four in number, namely a first base element **100,** a second base element **100,** a third base element **100,** and a fourth base element **100.**

In the stacked configuration, the bottom side **102** of the first base element **100** rests on the underlying surface. Further, the second base element **100** is stacked on the first base element **100** such that the first base element **100** is at least partially stuck in the second base element **100.** In other words, when the second base element **100** is stacked on the first base element **100,** the top side **104** of the first base element **100** including the plurality of protrusions **107** is completely stuck in the second base element **100.** Further, the side surface **106** of the first base element **100** is at least partially stuck in the second base element **100.** In other words, when the first base element **100** and the second base element **100** are stacked together, then the top side **104** of the first base element **100** including the plurality of protrusions **107** are completely covered by the overlying second base element **100** and the side surface **106** of the first base element **100** is at least partially covered by the overlying second base element **100.** Likewise, the third base element **100** is stacked on the second base element **100** and the fourth base element **100** is stacked on the third base element **100.**

In the drawings and specification, there have been disclosed exemplary embodiments and examples of the invention and, although specific terms are employed, they are used in a generic and descriptive sense only and not for the purpose of limitation of the scope of the invention being set forth in the following claims.

### LIST OF ELEMENTS

- **100**: Base Element
- **102**: Bottom Side
- **104**: Top Side
- **106**: Side Surface
- **107**: Protrusions
- **108**: Legs
- **109**: Foot
- **110**: Holding Structure
- **112**: Holding Pocket
- **114**: Walls
- **116**: Opening
- **118**: Pump
- **120**: Hose Reel
- **122**: Hose
- **124**: Rollers
- **126**: Inspection Door

## Claims

1. A base element (**100**) of a water collection module, comprising:
a bottom side (**102**) and opposite to it and connected via a side surface (**106**) a top side (**104**);
wherein the bottom side (**102**) forms a base face for standing the base element (**100**) on an underlying surface; and
wherein the top side (**104**) forms a mounting face to hold any other device, in particular a water reservoir, mounted to it;
**characterized in that:**
a holding structure (**110**) is formed inside the base element (**100**); and
the holding structure (**110**) incorporates at least one holding pocket (**112**) for removably holding a watering accessory.

2. The base element (**100**) according to claim **1,** wherein the base element (**100**) and the holding structure (**110**) are integrally formed.

3. The base element (**100**) according to any one of the preceding claims, wherein the watering accessory is formed by one of a pump (**118**) and/or a hose and/or a hose reel (**120**).

4. The base element (**100**) according to one of the claims **1** to **2**, wherein the holding structure (**110**) incorporates the holding pocket (**112**) for holding a water inlet, wherein the water inlet is configured to receive water from the water reservoir.

5. The base element (**100**) according to claim **4,** wherein the holding structure (**110**) incorporates the holding pocket (**112**) for holding at least one tube or hose to transport water entering the base element (**100**) via the water inlet.

6. The base element (**100**) according to claim **1,** wherein the base element (**100**) includes an opening (**116**) to access the watering accessory.

7. The base element (**100**) according to claim **3,** wherein the hose reel (**120**) is held in an upright position.

8. The base element (**100**) according to claim **1,** wherein a plurality of legs (**108**) extends from the top side (**104**) to the bottom side (**102**) to support the base element (**100**) on the underlying surface.

9. The water collection module, comprising of the water reservoir housed on top of the base element (**100**) according to one of the claims **1-8.**

## Amended claims

### Amended claims in accordance with Rule 137(2) EPC.

1. A base element **(100)** of a water collection module, comprising:
a bottom side **(102)** and opposite to it and connected via a side surface **(106)** a top side **(104);**
wherein the bottom side **(102)** forms a base face for standing the base element **(100)** on an underlying surface; and
wherein the top side **(104)** forms a mounting face to hold any other device, in particular a water reservoir, mounted to it;
**characterized in that:**
a holding structure **(110)** is formed inside the base element **(100);** and
the holding structure **(110)** incorporates at least one holding pocket **(112)** adapted to removably hold a watering accessory.

2. The base element **(100)** according to claim **1,** wherein the base element (100) and the holding structure **(110)** are integrally formed.

3. The base element **(100)** according to any one of the claims **1** to **2,** wherein the holding structure **(110)** incorporates the holding pocket **(112)** for holding a water inlet, wherein the water inlet is configured to receive water from the water reservoir.

4. The base element **(100)** according to claim **3,** wherein the holding structure **(110)** incorporates the holding pocket **(112)** for holding at least one tube or hose to transport water entering the base element **(100)** via the water inlet.

5. The base element **(100)** according to any one of the claims **1-4,** wherein the base element **(100)** includes an opening **(116)** to access the watering accessory.

6. The base element **(100)** according to any one of the claims **1-5,** wherein a plurality of legs **(108)** extends from the top side **(104)** to the bottom side **(102)** to support the base element **(100)** on the underlying surface.

7. A water collection module, comprising:
the base element **(100)** according to any one of the claims **1-6;** and the water reservoir housed on top of the base element **(100).**
